# FASCICULE DE BREVET EUROPEEN

(11) **EP 3 724 058 B1**
(45) Date de publication et mention de la délivrance du brevet: **28.06.2023**
(21) Numéro de dépôt: 18845465.6
(22) Date de dépôt: 10.12.2018
(51) Int. Cl.: B62H 5/04, B62K 15/00, B62K 21/12, B62K 21/24

(54) **POUR VÉLO (CYCLES EN GÉNÉRAL), POTENCE PLIABLE LATÉRALEMENT INSTANTANÉMENT SELON UN AXE VERTICAL OU PRESQUE ET PERMETTANT LE RANGEMENT/TRANSPORT/STATIONNEMENT, ET CONSTITUANT AUSSI UN ÉVENTUEL SYSTÈME ANTIVOL**
LENKSTANGE FÜR FAHRRÄDER (ODER FAHRRADFAHRZEUGE ALLGEMEIN), DIE SOFORT SEITLICH ENTLANG EINER VERTIKALEN ODER NAHEZU VERTIKALEN ACHSE GEFALTET WERDEN KANN, WAS DAS VERSTAUEN/TRANSPORTIEREN/PARKEN ERMÖGLICHT UND AUCH EIN MÖGLICHES DIEBSTAHLSCHUTZSYSTEM DARSTELLT
FOR BICYCLE (OR CYCLE VEHICLES IN GENERAL), STEM THAT CAN BE FOLDED LATERALLY INSTANTANEOUSLY ABOUT A VERTICAL OR NEAR-VERTICAL AXIS, AND ALLOWING STORAGE/TRANSPORTATION/PARKING, AND ALSO CONSTITUTING A POSSIBLE ANTI-THEFT SYSTEM

(30) Priorité: 11.12.2017 FR 1701296
(43) Date de publication de la demande: 21.10.2020
(73) Titulaire: Savard, Franck Jean, 17410 Saint Martin de Ré (FR)
(72) Inventeur: Savard, Franck Jean, 17410 Saint Martin de Ré (FR)
(74) Mandataire: Ipside
(86) Numéro de dépôt international: PCT/FR2018/000266
(87) Numéro de publication internationale: WO 2019/115889

(56) Documents cités:
- CA-A1- 2 916 268
- FR-A- 423 907
- JP-A- H1 120 759
- JP-U- H0 481 894
- US-B1- 6 192 773

## Description

Pour vélo (cycles en général), potence pliable latéralement instantanément selon un axe verticale ou presque et permettant le rangement/transport/stationnement, et constituant aussi un éventuel système antivol.

Quelles soient à plongeur (vélos urbains) ou « ahead set »(vélos sports), les potences (qui supportent le guidon) rangement/transport instantanées existantes sont pivotantes coaxialement de l'axe de direction de la fourche avant, ce qui n'optimise pas la réduction de largeur recherchée et/ou la simplification de réalisation (tolérances d'usinage et chaîne de cotes délicates... !) et rend complexe et onéreux l'introduction d'un système antivol, avec une clé qui le plus souvent perturbe la partie supérieure de la potence, ce qui gêne la pose d'un accessoire (smartphone par exemple) au-dessus de la potence. Document JP H11 20759 A montre le préambule de la revendication 1.

Le problème résolu par l'invention est de réduire au minimum la largeur du vélo au niveau du guidon quand on souhaite le ranger ou le transporter ou le stationner, et /ou de simplifier la réalisation ; et éventuellement le rendre à volonté inconduisible par une direction désolidarisée et /ou désaxée de la roue avant, grâce à une clé antivol disposée sur le côté ou, dans une configuration non revendiquée, sur la face avant de la potence, ce qui libère parfaitement l'espace supérieur de la potence, qui peut ainsi recevoir directement ou par l'intermédiaire d'une platine interface, un accessoire tel que smartphone, compteur, cardio fréquence mètre, caméra...

Pour cela l'invention est caractérisée par une potence pliable, support d'un guidon, et qui permet le rabattement instantané du dit guidon le long du vélo, éventuellement la dite potence est réglable en ergonomie et elle comporte : un corps de potence solidaire hyperstatique par un moyen de serrage rapide ou non d'un pivot de direction (fourche avant), le dit corps de potence est porteur directement ou indirectement d'au moins un palier de rotation sur lequel peut osciller à volonté et aux besoins un bras de potence ; le dit palier étant positionné pour réaliser un axe de pliage de la potence qui est parfaitement distinct de l'axe du dit pivot de direction, tout en lui étant parallèle ou presque, c'est-à-dire plutôt verticale dans une position normale d'utilisation du vélo. Selon des modes particuliers de réalisation, et en considérant que le vélo est en situation ou ses deux roues sont alignées:
- l'axe de pliage de la potence est placé latéralement au plan médian longitudinal vertical du cycle, l'axe de rotation du barillet de la serrure antivol est préférentiellement perpendiculaire horizontalement du dit axe de pliage de la potence; le dit axe de rotation du dit barillet est coaxial, d'un noyau droit porteur des deux vis paliers permettant le pliage de la potence, et d'un noyau gauche porteur du doigt qui verrouille le bras de potence oscillant autour du dit axe de pliage.de la potence quand le dit bras est en position normale d'utilisation ; un moyen de liaison permet au barillet de la serrure antivol d'entraîner le dit doigt de verrouillage dans le trou prévu à cet effet dans le bras de potence ; il va de soi que dans ce mode de réalisation, le dit axe de pliage peut s'incliner significativement en regard de la verticale, soit vers l'avant, soit vers l'arrière, ce qui permet grâce à des vis de serrage des dits noyaux de modifier au besoin la position du guidon en hauteur et en profondeur.
- L'axe de pliage de la potence, dans une configuration non revendiquée, est placé dans le plan médian longitudinal vertical du cycle, en avant de l'axe du pivot de direction ; l'axe de rotation du barillet de la serrure antivol est préférentiellement perpendiculaire du dit axe de pliage de la potence et dans le dit plan médian ; là aussi, un moyen de liaison permet au barillet de la serrure antivol d'entraîner le dit doigt de verrouillage dans le trou prévu à cet effet dans le bras de potence.
- Comme la clé de la serrure antivol est placé sur le côté ou, dans une configuration non revendiquée, devant la potence, un espace vierge est disponible au-dessus du bras de potence pour intégrer ou installer directement ou grâce à une platine interface un accessoire tel qu'un smartphone ou un compteur kilométrique...
- la potence selon l'invention, peut-être du type sportif «aheadsét », ou urbain traditionnellement à plongeur ; avantageusement quand le type à plongeur est choisi, l'invention prévoit préférentiellement de dotée la dite potence d'un moyen rapide de réglage et de blocage en hauteur par le coulissement du dit plongeur de potence dans le pivot de la fourche de la roue avant, répondant ainsi à une grande possibilité d'ergonomie.

Les dessins annexés illustrent l'invention.
La figure 1 représente vue de ¾ arrière droit supérieur, une potence selon l'invention, particulièrement ergonomique ; de type plongeur, avec clé antivol sur le côté droit de la dite potence, en situation normale d'utilisation du cycle et notamment munie d'accessoires, en l'occurrence un smartphone et un support de fixation rapide de panier; quand le verrouillage du bras de potence est effectué, la clé de la serrure antivol peut être retirée.
La figure 2 représente une vue similaire à la figure 1, en situation de rangement ou de transport ou de stationnement, le bras de potence étant braqué à droite ; le doigt de blocage étant saillant, la clé a pu être retirée, le guidon étant devenu fou, le cycle est inconduisible.
La figure 3 représente une vue en coupe de la figure 1 démuni du smartphone.
La figure 4 représente la potence des vues précédentes, avec en l'occurrence le bras de potence incliné vers le bas, ceci pour baisser et reculer le guidon pour un cycliste de petite taille ; le levier de blocage du biseau de pivot de fourche est relevé ce qui autorise le coulissement du plongeur de potence dans le pivot de fourche, permettant ainsi un autre réglage de la hauteur du guidon,
La figure 5 représente la potence des vues précédentes, avec en l'occurrence le bras de potence incliné vers le haut, pour lever et dans une certaine mesure (le maximum d'avancée étant obtenu quand le bras de potence articulé est horizontal) avancer le guidon ceci pour un cycliste de grande taille ; le levier de blocage du biseau de pivot de fourche est rabaissé ce qui bloque le coulissement du plongeur de potence dans le pivot de fourche, permettant ainsi l'utilisation du cycle
La figure 6 représente la potence précédente dépourvue de ses différents corps et noyaux afin de rendre plus visible les éléments mécaniques internes de la potence illustrée précédemment.
Les Figures 7,8 et 9 représentent la potence vue précédemment, selon les trois plans cardinaux, et en situation de roulage du cycliste.
La figure 10 représente vue de ¾ avant droit supérieur, une potence selon l'invention, de type « aheadset », avec clé antivol sur l'avant de la dite potence, en situation normal d'utilisation du cycle; le verrouillage du bras de potence étant effectué, la clé de la serrure antivol peut être retirée.
La figure 11 représente la potence de la figure 10 mais dans une vue similaire à la figure 2, mais dans une configuration non revendiquée, c'est-à-dire en situation de rangement ou de transport ou de stationnement, le bras de potence étant braqué à droite ; le doigt de blocage étant saillant, la clé a pu être retirée, le guidon étant devenu partiellement ou totalement bloqué à droite (mode de réalisation retenu en l'occurrence pour le corps de potence), le cycle est inconduisible.
La figure 12 représente la potence précédente, dans une configuration non revendiquée, dépourvue de ses différents corps et support d'accessoires afin de rendre plus visible les éléments mécaniques internes de la potence illustrée juste précédemment.

En référence à ces dessins, un vélo (1) équipé de la potence pliable (7). comporte un corps (8) solidaire du pivot de fourche (3), sur ce corps (8) oscille un bras de potence (9) grâce à au moins une vis palier (10), constituant un axe de rotation parfaitement distinct de l'axe du pivot de fourche (3) et qui est sensiblement vertical, ce qui permet au guidon (5) de se rabattre sensiblement horizontalement le long du vélo (1).

Un moyen de blocage (13), préférentiellement associé à une serrure antivol (14) à clé (15), permet de solidariser et donc d'immobiliser le dit bras de potence (9) avec le corps (8) pour pouvoir utiliser le vélo normalement ; la clé (15) pouvant alors être retiré ; le dit moyen de blocage (13) piloté par la clé (15), permet de libérer le dit moyen de blocage (13), ce qui désolidarise le bras de potence (9) en regard du corps (8), rendant ainsi inutilisable le vélo, puisque la clé (15) aura été retiré.

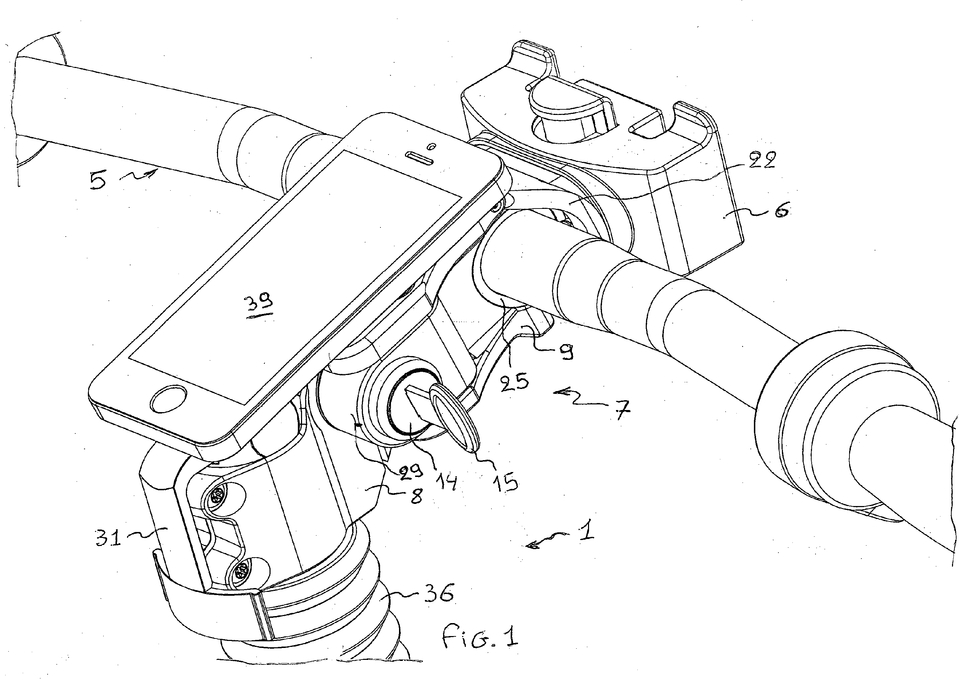

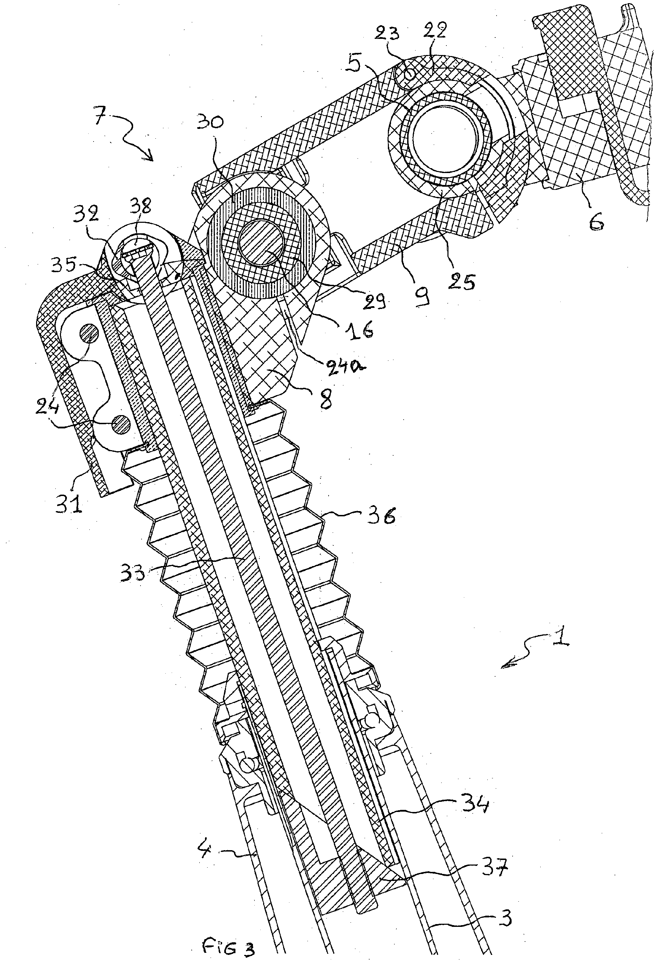

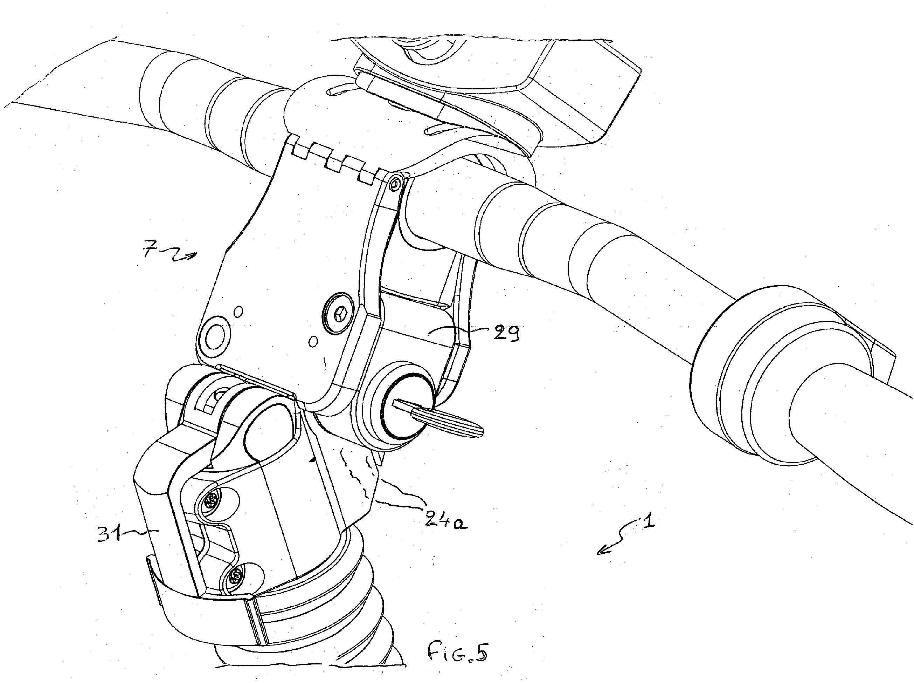

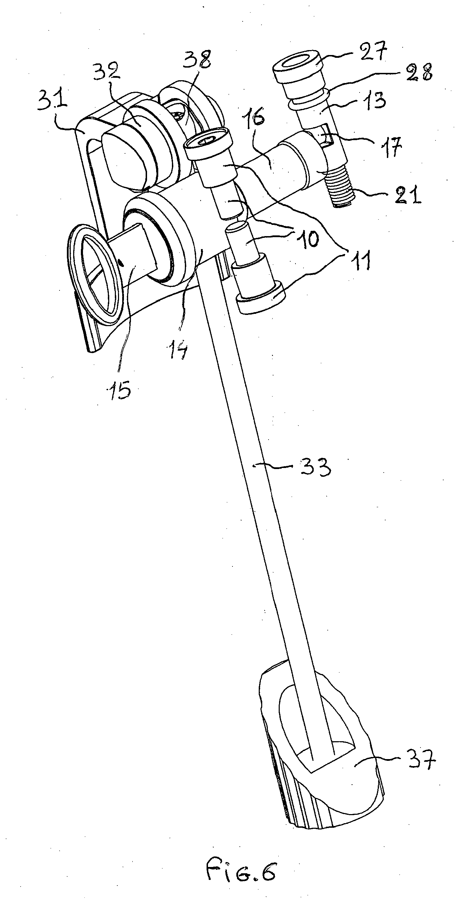

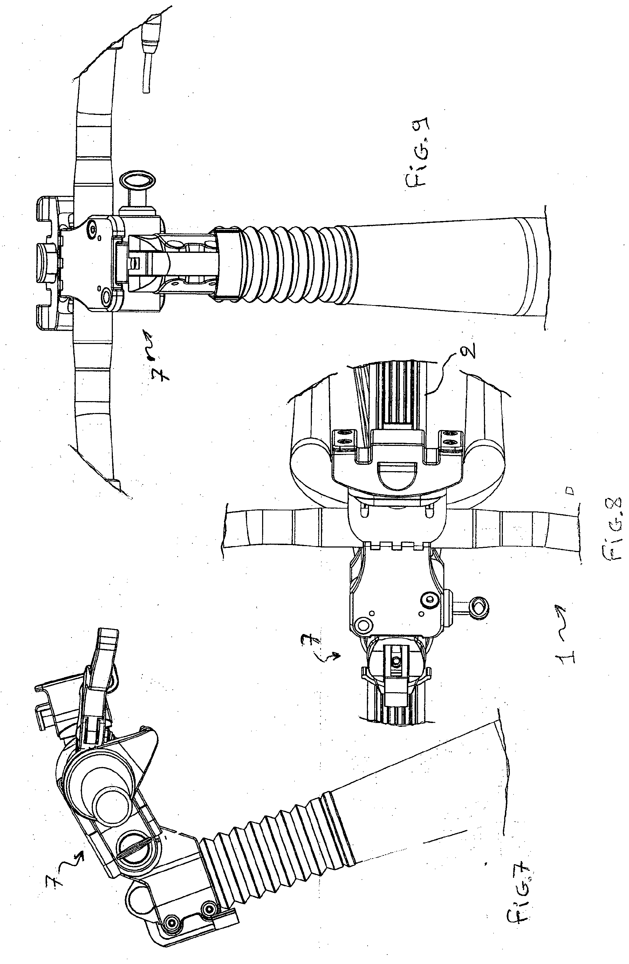

Selon un premier mode de réalisation particulier, et plutôt destiné au vélo de type urbain, illustré par les figures 1 à 9, la potence (7) est du type à plongeur (34) qui coulisse dans le pivot (3) de la fourche de la roue avant (2), le dit plongeur après réglage de la hauteur de la potence (7) désirée, est rendu hyperstatique du dit pivot (3) par serrage de la vis (33) qui exerce une traction sur l'écrou biseau (37) qui en se désaxant provoque le blocage en coulissement de la potence (7) sur le pivot (3).

Pour permettre une plus grande facilité et rapidité de réglage, un levier (31) agit par l'intermédiaire d'un excentrique (32) qui coopère avec un patin (35), sur un cylindre (38) percé radialement et qui reçoit la tête de la dite vis (33), tirant ou relâchant la traction exercée sur la vis (33) par la manoeuvre du dit levier (31). Un soufflet (36) enjoliveur et de protection est interposé entre la colonne de direction (4) du vélo (1) et la potence (7). Le dit plongeur (34) est solidaire (monobloc, serrage par vis, emmanchement à force, soudure...) du corps (8) de la potence (7).

Le corps (8) dispose dans sa partie avant d'un collier qui serre par des vis (24) un noyau gauche (30) coaxial du dit collier, ce noyau (30) est porteur du moyen de blocage (13) qui en l'occurrence est un doigt (13) protégé par un joint torique (28). Ce sont ces vis de serrage (24) qui permettent de libérer le serrage du dit collier et donc d'incliner à volonté le bras de potence (9) avant resserrage.

Coaxialement du collier du corps (8) et donc du noyau (30), un autre noyau (29), situé lui à droite du collier, sert de support aux vis (10) qui constituent les paliers de rotation du bras de potence (9), ce qui traduit bien la notion de pliage de la potence (7) ; préférentiellement pour fiabiliser la rotation oscillante du bras de potence (9), des entretoises épaulées (11) en laiton par exemple, sont interposées entre les vis (10) et le noyau (29).

La serrure (14) est logée dans le noyau (29) coaxialement du collier du corps (8) et sur le côté droit du corps (8), et par conséquent est coaxiale aussi du noyau (29) ; le barillet de la serrure (29) actionné par la clé (15), entraine un arbre de transmission qui possède à son extrémité gauche un pion (17) excentré, le dit pion (17) agit comme une came qui lève ou baisse le doigt (13), bloquant ou libérant à volonté et aux besoins le bras de potence (9).

Par souci de fiabilité, le trou (12) du bras de potence (9) sera manchonné par une bague épaulée (27) en acier trempé par exemple.

Par souci de réduction des jeux entre, le doigt (13) qui sera aussi long que possible et parfaitement ajusté en coulissement dans le noyau (30), et la bague (27), ceux-ci auront des formes tronconiques conjuguées, qui sous la pression d'un ressort (21) poussant sous le doigt (13) dont le lamage de logement du pion (17) contribue à annuler les jeux parasites.

Avantageusement le bras de potence (9) sera doté de moyen(s) de fixation comme au moins un trou fileté (26), pour fixer directement ou grâce à une platine interface, un accessoire, ici en l'occurrence un smartphone (39).

Toujours avantageusement, le demi collier (22) qui serre directement ou via une bague (25) de calage le guidon (5), sera muni d'un moyen de fixation, pour par exemple un support de panier (6) en l'occurrence ou une lumière...

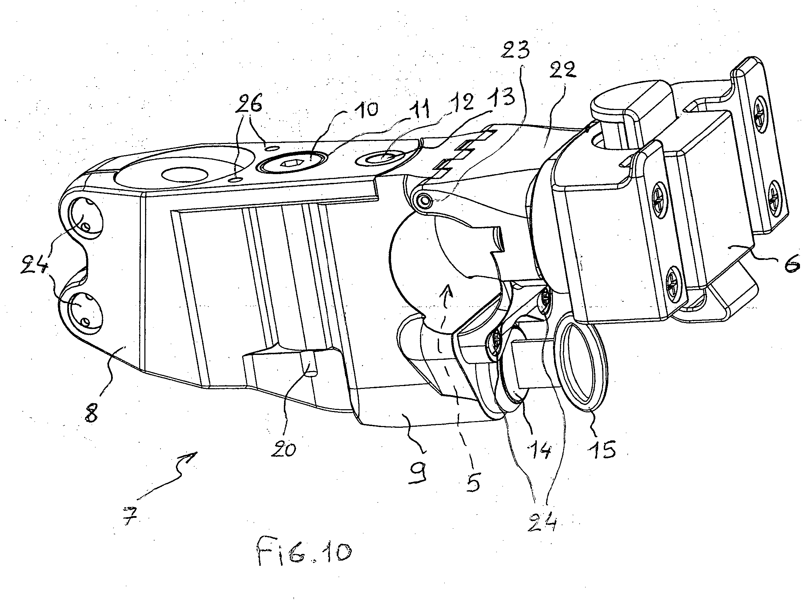

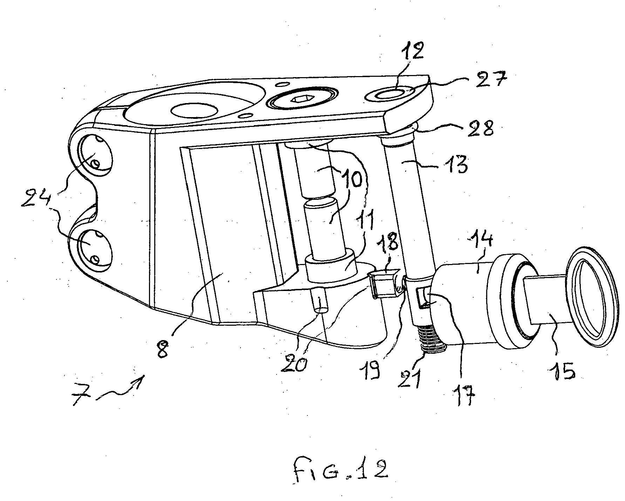

Selon un deuxième mode de réalisation particulier, mais non revendiqué, et plutôt destiné au vélo de type sportif, illustré par les figures 10 à 12, la potence (7) est du type « aheadset ». Ici, directement cette fois, le corps de potence (8) sert de support aux vis (10) qui constituent les paliers de rotation du bras de potence (9), ce qui traduit bien là aussi, la notion de pliage de la potence (7) ; préférentiellement des entretoises épaulées (11) sont interposées entre les vis (10) et le corps de potence (8).

Dans le bras de potence (9) est logée la serrure (14) dont l'axe de rotation de son barillet est dans le plan médian longitudinal vertical du dit bras de potence (9), et sous le demi collier (22) de fixation du guidon, préférentiellement ce demi-collier (22) est solidaire du bras de potence (9) par une charnière d'axe (23) et des vis de serrage (24) ; le barillet de la serrure (14) actionné par la clé (15), entraine un pion (17) excentré, le dit pion (17) agit comme une came qui lève ou baisse le doigt (13), bloquant ou libérant à volonté et aux besoins le bras de potence (9).

Par souci de fiabilité, le trou (12) du bras de potence (9) sera manchonné par une bague épaulée (27) en acier trempé par exemple.

Par souci de réduction des jeux entre le doigt (13) qui sera aussi long que possible et parfaitement ajuster en coulissement dans le bras de potence (9), et la bague (27), ceux-ci auront des formes tronconiques conjuguées, qui sous la pression d'un ressort (21) poussant sous le doigt (13) dont le lamage de logement du pion (17) contribue à annuler les jeux parasites.

Préférentiellement, mais dans une configuration non revendiquée, des crans d'indexation (20) sont réalisés dans le corps (8) pour permettre à un indexeur (18) logé dans le bras de potence (9) et mis en pression par un ressort (19), de positionner précisément le dit bras de potence (9) sur les positions de roulage et de parking.

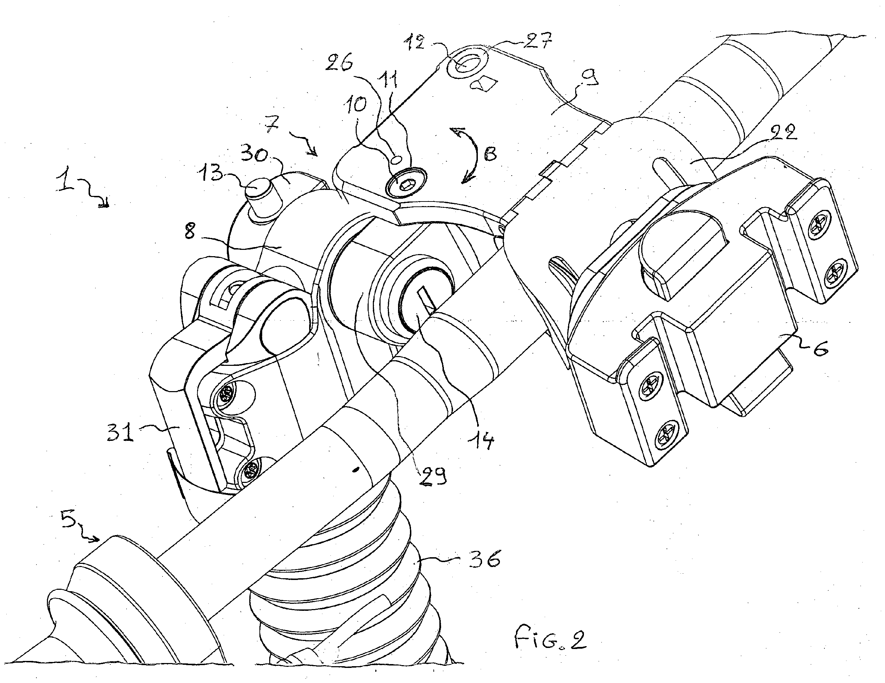

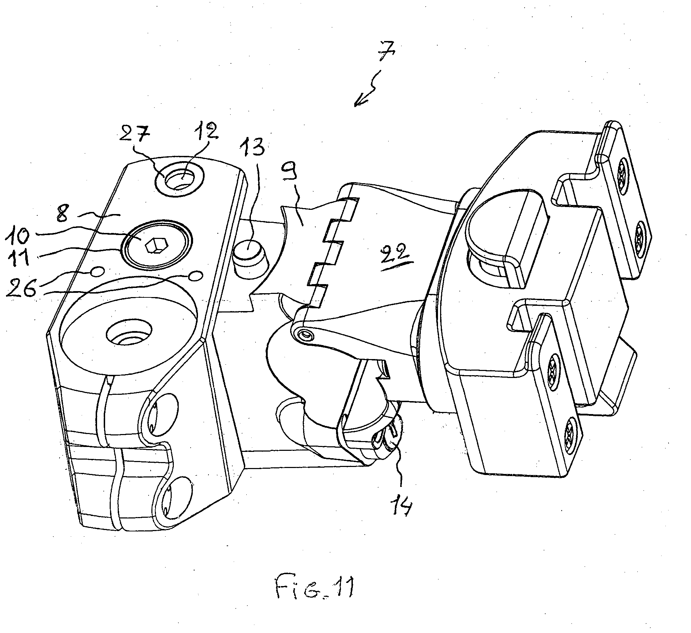

La figure 2 et la figure 11 sont très importantes en ce qui concerne la cinématique et le processus d'utilisation, car elles montrent le vélo (1) dans la situation rangement ou transport. Ou stationnement ; pour mettre la potence dans cette situation pliée à 90°, l'utilisateur à précédemment tourné la clé (15), ce qui a provoqué le retrait du doigt (13) du bras de potence (9), ainsi libéré le bras (9) a pu tourner, pour venir se cranter sur une position à 90 ° vers la droite. Pour actionner la position antivol dans cette situation, le cycliste remet la clé dans la position initiale, ce qui fait ressortir le doigt (13) et permet le retrait de la dite clé (15). Ainsi saillant, le doigt (13) interdit de remettre le guidon (5) en position normale de conduite, en fait le dit guidon est en quelque sorte fou ou bloqué désaxé et donc qu'il n'agit plus normalement sur la fourche (3) porteuse de la roue avant (2), ce qui est dissuasif pour un voleur.

Non illustré, le doigt de verrouillage (13) pourrait avoir un logement spécifique avec ou sans jeu angulaire dans le bras de potence (9) du guidon (5) quand celui-ci est rabattu latéralement le long du vélo, remplaçant la dissuasion de voler le vélo qui était précédemment obtenu par un guidon (5) fou en direction, par une dissuasion ou le guidon est positionné verrouillé avec ou sans jeu angulaire, de façon rabattu le long du vélo.

Avantageusement le bras de potence (9) sera doté de moyen(s) de fixation comme au moins un trou fileté (26), pour fixer directement ou grâce à une platine interface, un accessoire, ici en l'occurrence un smartphone (39).

Par sécurité supplémentaire, les vis de fixation (24) pourraient être antivol, par exemple en ayant une tête coopérant avec un outil codé pour le vissage et surtout pour le dévissage des dites vis (24), renforçant ainsi d'avantage la dissuasion contre le vol du vélo.

Il va de soi que la fonction de blocage/déblocage du bras de potence (9) par une serrure (14) activée par une clé (15), peut être réalisée, dans une configuration non revendiquée, par un simple bouton poussoir par exemple, en remplacement de la serrure (15), si la fonction antivol n'est pas recherchée.

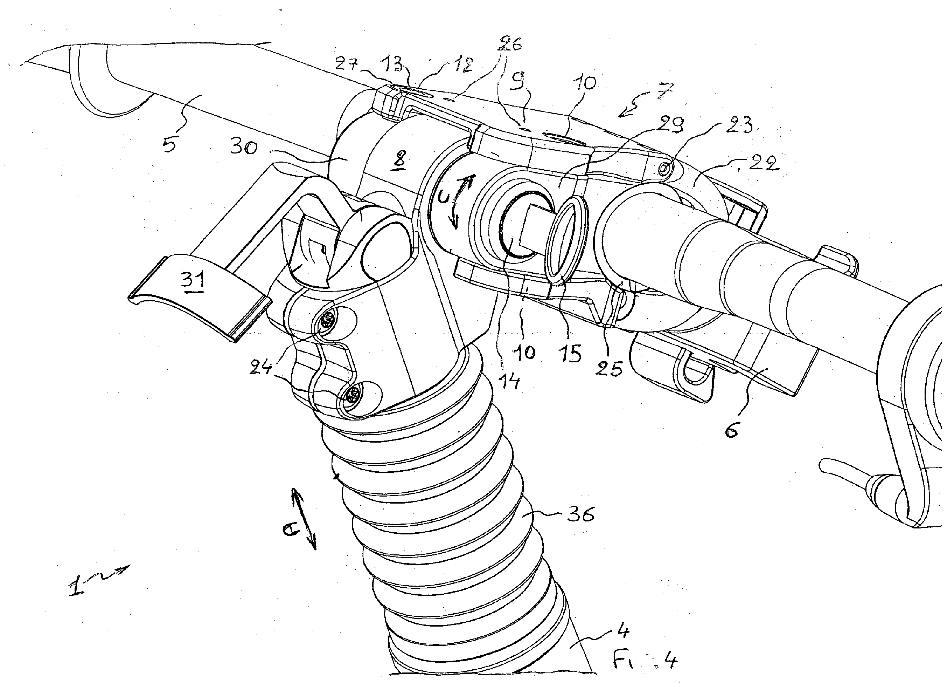

### NB que sur les figures 2 et 4 :

- La flèche (A) indique le réglage rapide possible en hauteur de toute la potence (7) et donc du guidon (5) grâce au levier (31).
- La flèche (B) indique le mouvement rotatif qui permet selon l'invention de rabattre le guidon (5) le long du vélo (1).
- La flèche (C) indique le mouvement basculant du bras (9) ; mouvement éventuellement amorti par un moyen élastique (non illustré) interposé entre le bras (9) et le corps (8) ; ou mouvement rendu hyperstatique par le serrage des vis (24a) qui agissent sur la partie en collier de l'extrémité avant du corps (8).

### Description des numéros de référence :

1 = Vélo.
2 = Roue avant.
3 = Fourche avant.
4 = Colonne de direction du cadre.
5 = Guidon avec ses équipements de commandes de freins et de vitesses.
6 = Eventuel support de panier et/ou de lumière... et préférentiellement solidaire du demi collier (22).
7 = Potence selon l'invention, support du guidon (5) et solidaire du pivot de la fourche (3).
8 = Corps de potence de la potence (7).
9 = Bras de potence de la potence (7).
10 = Vis palier de maintien du bras (9) sur le corps (8), et coaxiales des entretoises (11).
11 = Entretoises épaulées assurant la rotation du bras (9) sur le corps (8), rotation oscillante selon un plan sensiblement horizontal, puisque perpendiculaire à l'axe des vis paliers (10).
12 = Trou dans le corps (8) ou le bras (9) selon le mode de réalisation choisi, et prévu pour recevoir en conjugaison de forme le doigt (13) de verrouillage.
13 = Doigt de verrouillage piloté par la serrure (14) et sa clé (15), de préférence tronconique à son extrémité supérieure.
14 = Serrure antivol, interdisant de repositionner de manière hyperstatique le guidon (5) en position normale d'utilisation, quand le vélo est laissé en parking.
15 = Clé de la serrure (14) et qui actionne en rotation le pion excentré (17).
16 = Eventuel arbre porteur du pion (17) et solidaire du barillet de la serrure (14).
17 = Pion excentré transformant le mouvement rotatif du barillet de la serrure (14) en un mouvement linéaire qui permet le déplacement du doigt (13), qui peut ainsi s'introduire dans le trou (12).
18 = Indexeur provocant un crantage des positions roulage et parking.
19 = Ressort de pression de l'indexeur (18).
20 = Reliefs recevant l'indexeur (18).
21 = Ressort de poussé sur le doigt (13) et qui vise à supprimer tout jeu résiduel du dit doigt (13) dans le trou (12).
22 = Demi collier permettant le serrage du guidon (5) contre le bras de potence (9).
23 = Axe charnière du demi-collier (22).
24 = Vis de serrage (éventuellement muni d'empreinte antivol, nécessitant un outil à code très spécial).
25 = Eventuel réducteur de guidon (5).
26 = Eventuel moyen de fixation (trous filetés par exemple) pour interface d'accessoire (smartphone, compteur, caméra...).
27 = Eventuelle bague (épaulée de préférence) porteuse du trou (12) et introduite en force dans le corps (8) ou le bras (9) et renforçant la liaison avec le doigt (13) car réalisée de préférence en acier trempé traité.
28 = Joint torique d'étanchéité.
29 = Noyau/axe permettant le mouvement de basculement (C) du bras (9), mais aussi porteur des vis paliers (10) et entretoises (11)
30 = Noyau/axe qui coopère coaxialement avec le noyau/axe (29), et permet donc aussi le mouvement de basculement (C) du bras de potence (9) ; il est porteur du doigt (13),
31 = Levier actionnant l'excentrique (32).
32 = Excentrique opérant une traction sur la vis (33).
33 = Vis de traction actionnant l'écrou en biseau (37) qui permet avec le biseau du plongeur (34) de fixer le plongeur en regard du pivot de la fourche (3).
34 = plongeur solidaire hyperstatique du corps (8) et coaxial du pivot de fourche (3) et muni d'un biseau à son extrémité inférieure.
35 = Entretoise épaulée solidaire du corps (8) et servant d'appui à la came du levier (31).
36 = Soufflet enjoliveur et de protection.
37 = écrou en biseau.
38 = Barillet.
39 = Accessoire intégré ou rapporté au bras de potence (9)

La potence selon l'invention est particulièrement destinée aux vélos et cycles en général, afin de faciliter le rangement, le transport, et le stationnement par la réduction de l'encombrement en largeur provoqué par le guidon, tout en apportant éventuellement une dissuasion contre le vol, dissuasion basé sur le principe de la reconstruction d'une fonction permettant l'usage du vélo et non pas de la simple destruction du moyen antivol.

## Revendications

1. Potence pliable pour vélo (7), pour permettre le rabattement instantané du guidon (5) le long du vélo (1) et éventuellement réglable en ergonomie, où la potence comporte un corps (8) de potence solidaire hyperstatique par un moyen de serrage rapide (31) ou non d'un pivot de direction (3), le dit corps (8) est porteur directement ou indirectement d'au moins un palier (10) de rotation sur lequel peut osciller à volonté et aux besoins un bras de potence (9) ; le dit palier (10) étant positionné selon un axe de pliage de la potence (7) qui est parfaitement distinct de l'axe du pivot de direction (3) tout en lui étant parallèle ou presque, c'est-à-dire plutôt vertical dans une position normale d'utilisation du vélo ;
**caractérisée en ce que** le corps (8) dispose dans sa partie avant d'un collier qui serre par des vis de serrage (24a) un noyau gauche (30) coaxial du dit collier, ce noyau gauche (30) est porteur d'un moyen de blocage (13), ce sont ces vis de serrage (24a) qui permettent de libérer le serrage du dit collier et donc d'incliner à volonté le bras de potence (9) ;
coaxialement du collier du corps (8) et donc du noyau gauche (30), un noyau droit (29), situé de l'autre côté du collier par rapport au noyau gauche (30), sert de support à des vis (10) qui constituent les paliers de rotation du bras de potence (9), ce qui traduit bien la notion de pliage de la potence (7).

2. Potence pliable (7) selon la revendication 1, **caractérisée en ce que** le moyen de blocage (13) est un doigt (13).

3. Potence pliable (7) selon la revendication 2, **caractérisée en ce qu'**une serrure (14) est logée dans le noyau droit (29), et par conséquent est coaxiale aussi du noyau droit (29) ; un barillet de la serrure (14) actionné par une clé (15), entraine un arbre de transmission qui possède à son extrémité gauche un pion (17) excentré, le dit pion (17) agit comme une came qui lève ou baisse le doigt (13), bloquant ou libérant à volonté et aux besoins le bras de potence (9).

## Patentansprüche

1. Faltbarer Vorbau für ein Fahrrad (7), um das augenblickliche Umklappen des Lenkers (5) entlang des Fahrrads (1) zu ermöglichen, und der gegebenenfalls ergonomisch verstellbar ist, wobei der Vorbau einen Vorbaukörper (8) umfasst, der durch ein Schnellspannmittel (31) hyperstatisch fest oder nicht hyperstatisch fest mit einem Lenkzapfen (3) verbunden ist, wobei der Körper (8) direkt oder indirekt mindestens ein Drehlager (10) trägt, an dem nach Wunsch und Bedarf ein Vorbauarm (9) schwingen kann; wobei das Lager (10) entlang einer Faltachse des Vorbaus (7) positioniert ist, die sich absolut von der Achse des Lenkzapfens (3) unterscheidet, während sie dieser allerdings parallel oder nahezu parallel, das heißt in einer normalen Gebrauchsstellung des Fahrrads eher vertikal ist;
**dadurch gekennzeichnet, dass** der Körper (8) in seinem vorderen Teil über eine Schelle verfügt, die durch Spannschrauben (24a) einen linken koaxialen Kern (30) der Schelle spannt, dieser linke Kern (30) ein Sperrmittel (13) trägt, diese Spannschrauben (24a) es ermöglichen, die Verspannung der Schelle freizugeben und damit den Vorbauarm (9) nach Wunsch zu neigen;
koaxial zur Schelle des Körpers (8) und damit zum linken Kern (30) ein rechter Kern (29), der sich in Bezug auf den linken Kern (30) auf der anderen Seite der Schelle befindet, als Träger für Schrauben (10) dient, die die Drehlager des Vorbauarms (9) darstellen, was das Konzept des Faltens des Vorbaus (7) gut wiedergibt.

2. Faltbarer Vorbau (7) nach Anspruch 1, **dadurch gekennzeichnet, dass** es sich bei dem Sperrmittel (13) um einen Stift (13) handelt.

3. Faltbarer Vorbau (7) nach Anspruch 2, **dadurch gekennzeichnet, dass** in dem rechten Kern (29) ein Schloss (14) untergebracht ist und folglich ebenfalls zum rechten Kern (29) koaxial ist; ein durch einen Schlüssel (15) betätigter Zylinder des Schlosses (14) eine Übertragungswelle antreibt, die an ihrem linken Ende einen exzentrischen Ansatz (17) besitzt, wobei der Ansatz (17) wie eine Nocke wirkt, die den Stift (13) hebt oder senkt, wobei der Vorbauarm (9) nach Wunsch und Bedarf gesperrt oder freigegeben wird.

## Claims

1. A bicycle foldable stem (7), for enabling instantaneous folding down of the handlebar (5) along the bicycle (1) and optionally ergonomically adjustable, where the stem comprises a stem body (8) secured in a hyperstatic manner by an optionally quick-release tightening means (31) to a steering pivot (3), said body (8) directly or indirectly supports at least one rotation bearing (10) on which a stem arm (9) can oscillate whenever required and when necessary; said bearing (10) being positioned according to a folding axis of the stem (7) that is perfectly distinct from the axis of the steering pivot (3) while remaining parallel or nearly parallel to it, in other words almost vertical in a normal use position of the bicycle;
**characterized in that** the body (8) is provided with a collar in its front part that tightens a left kernel (30) coaxial with said collar by means of tightening screws (24a), this left kernel (30) supports a locking means (13), these tightening screws (24a) allow releasing the tightness of said collar and therefore inclining the stem arm (9) whenever required;
coaxial with the collar of the body (8) and therefore with the left kernel (30), a right kernel (29), located at the other side of the collar with respect to the left kernel (30), acts as a support for the screws (10) that form the rotation bearings of the stem arm (9), which clearly represents the concept of folding the stem (7) .

2. The foldable stem (7) according to claim 1, **characterized in that** the locking means (13) is a pin (13) .

3. The foldable stem (7) according to claim 2, **characterized in that** a lock (14) is housed in the right kernel (29), and consequently is also coaxial with the right kernel (29); a drum of the lock (14) actuated by a key (15), drives a transmission shaft that has an eccentric pin (17) at its left end, said pin (17) acts like a cam that raises or lowers the pin (13), locking or releasing the stem arm (9) at will and depending on requirements.
